(19)

**Europäisches Patentamt**
**European Patent Office**
**Office européen des brevets**

(11) **EP 1 615 161 B1**

(12) **EUROPEAN PATENT SPECIFICATION**

(45) Date of publication and mention
of the grant of the patent:
**13.12.2017 Bulletin 2017/50**

(21) Application number: **05011571.6**

(22) Date of filing: **12.06.2001**

(51) Int Cl.:
*G06F 3/0488* (2013.01)    *G06F 3/033* (2013.01)
*G06K 17/00* (2006.01)    *G06F 3/048* (2013.01)
*G07G 1/00* (2006.01)

(54) **Systems, methods and apparatuses for real-time tracking of packages**

Systeme, Verfahren und Geräte zur Echtzeitverfolgung von Paketen

Systèmes, procédés et appareils de localisation de paquets en temps réel

(84) Designated Contracting States:
**AT BE CH CY DE DK ES FI FR GB GR IE IT LI LU
MC NL PT SE TR**

(30) Priority: **12.06.2000 US 211229 P**

(43) Date of publication of application:
**11.01.2006 Bulletin 2006/02**

(62) Document number(s) of the earlier application(s) in
accordance with Art. 76 EPC:
**03005905.9 / 1 327 931**
**01942185.8 / 1 292 913**

(73) Proprietor: **UNITED PARCEL SERVICE OF
AMERICA, INC.**
**Atlanta, GA 30328 (US)**

(72) Inventors:
• **Metaxatos, Paul**
**Brookline**
**Massachusetts 02446 (US)**
• **Friedley, Paul D.**
**New Freedom**
**Pennsylvania 17349 (US)**
• **Salzman, Dave**
**Montville,**
**New Jersey 07045 (US)**
• **Hamblen, Guy A.**
**New Foundland**
**New Jersey 07435 (US)**
• **Burdick, Joseph**
**Pomona**
**New York 10970 (US)**
• **Glave, Gerald**
**Sparta**
**New Jersey 07871 (US)**
• **Marsh, Donald**
**Liberty**
**Missouri 64086 (US)**

(74) Representative: **Black, Diego et al**
**Withers & Rogers LLP**
**4 More London Riverside**
**London SE1 2AU (GB)**

(56) References cited:
**EP-A2- 0 810 560    EP-A2- 0 911 754**
**EP-A2- 1 001 388    WO-A2-96/13015**
**JP-A- 4 329 458    JP-A- 61 133 463**

**Description**

FIELD OF THE INVENTION

This invention relates to real-time package tracking systems and methods, and to portable hand held devices configured to acquire information through multiple input interfaces. The device of the present invention incorporates improvements in the Delivery Information Acquisition Device (DIAD) presently utilized by United Parcel Service.

BACKGROUND OF THE INVENTION

In routine package delivery services, United Parcel Service (UPS) delivery drivers obtain data using a DIAD device. The DIAD is an electronic clipboard that replaces the driver's written documents and transmits shipment information directly into the UPS tracking system. Because the DIAD electronically records delivery information it eliminates million sheets of paper a year and allows UPS to capture data and electronic signatures at a major point of contact - upon delivery to the recipient. Currently, more than 60,000 delivery personnel utilize such DIAD devices.
To capture digital recipient signatures, the DIAD device contains an LCD display and a separate signature capture window that accepts input from a stylus. When the customer signs in the capture window using the stylus, the signature appears in the LCD display. The DIAD's capture of digitized recipients' signatures enables these signatures to be available electronically for delivery verification. Signatures are downloaded into a mainframe that is accessible by customer service representatives and customers. Therefore, business customers that are connected electronically to UPS through secure connections (e.g., via the Internet) have access to the digitized signatures so they can pass them on to customers with inquiries. Similarly, when a customer claims a package was not delivered, the customer (or a customer service representative) can determine its status, specifically, whether the package was delivered, and if so, who signed for it.
In a typical delivery, the driver identifies a package to be delivered using a laser-scanner built into or attached to the DIAD device. In this manner the DIAD captures into its memory data from bar coded packages. Additional data collected by the DIAD upon delivery is also captured using key entry, barcode scanning, electronic signature capture, and electronic data transfer. Once collected, package tracking information is transferred to a mainframe based package tracking system (PTS) in real time whenever the driver returns to his or her vehicle and inserts the DIAD into a delivery vehicle adapter (DVA) in the delivery vehicle which is an onboard cradle into which UPS drivers insert the DIAD in order to transmit data to the UPS host system over a wireless network. The adapter provides a communications link between the DIAD and vehicle-mounted data radio equipment, namely, a cellular telephone modem that can communicate with the mainframe computer via a nationwide cellular network. Once received, the information is used to ensure that tracking information available to customers is kept current and available to customers via the Internet or telephone call-in center. The DIAD also has an acoustic link to a standard telephone so that tracking information can be transmitted when the driver will be away from the vehicle for an extended period.
Although the DIAD has been effective, it is limited by a number of characteristics which limit its effectiveness as a tool for real-time tracking of packages. First, as previously noted, the DIAD device contains an LCD display and a separate signature capture window that accepts input from a stylus. When the customer signs in the capture window using the stylus, the signature appears in the LCD display. However, the customer signature does not appear within the signature capture window during customer execution of the signature. Thus, signing the signature capture window using the stylus is equivalent to writing using invisible ink. Some customers have been uncomfortable with the remote appearance of their signature or have found it difficult to sign without seeing the result of their writing appear directly under the stylus. Furthermore, because the touch panel of the signature capture device may be constructed of a resistive material, variations in the pressure exerted by the person signing can create spurious voltages leading to a poor image of the signature or poor accuracy in reproducing the track of the stylus. For example, when a person lifts a stylus from such a device, the release of pressure can be misinterpreted as a written line. Prior attempts to solve this problem have typically involved making the screen structurally less sensitive to pressure, which also results in less accuracy. Thus, there has been a need for a better quality representation of signatures and better tracking between the stylus movement and the graphic representation thereof as the stylus moves across the screen.
Secondly, in using the DIAD device to obtain a customer's signature, the driver must hand the DIAD device to the customer and reverses it so that the customer can sign in the proper orientation. After the customer signs, the driver retrieves the device and turns it back around to view the signature and key enter the customer's name. Therefore, the driver and customer both view the DIAD device from the same perspective. The passing and manipulation of the device for this purpose uses time and increases the risk that the device will be dropped and possibly damaged. Furthermore, because the customer controls the device, it is possible that the customer may inadvertently press one or more buttons on the DIAD device which require driver correction.
Third, although the DIAD can communicate with a mainframe computer via a nationwide cellular network, this requires the DIAD to be inserted into the vehicle adapter, which provides the communications link between the DIAD and vehicle-mounted data radio equipment, namely, a cellular telephone modem that can communicate with the mainframe computer. As an alternative, the DIAD has an acoustic link to a standard telephone so that tracking information can be transmitted when the driver will be away from the vehicle for an extended period. However, this requires that the driver spend valuable time sending the information using a relatively slow acoustic link. Thus, there is no means of rapidly communicating with the mainframe computer in near real-time after effecting delivery of a package where the DIAD device is not immediately placed in the vehicle adapter after package delivery. Furthermore, while data may be transferred from the DIAD to the mainframe, there is no two-way communication functionality allowing the DIAD to receive data, which may be advantageous when updating information stored in the DIAD or when communicating with delivery personnel who have left their vehicle.

What is needed is an improved DIAD that includes an improved signature capture screen that digitally illustrates a signature while it is being written, an improved signature screen that permits a driver to maintain control of the DIAD while a customer signature is received, and a built in cellular antenna to transmit shipping data to a mainframe when the DIAD is not docked in the DVA.

Patent application EP1001388 (A2) relates to an electronic transaction apparatus for processing a transaction engaged in by parties facing each other, during which one party (a customer) confirms transaction information entered by the other party (a waiter) and the direction in which the transaction information is displayed on a display unit of the apparatus is automatically reversed.

Patent application WO9613015 (A2) relates to a delivery tracking system capable of tracking parcels during an internal stage of delivery within an organization after receipt of the parcel from the parcel delivery service. The system utilizes an intelligent, handheld, portable data entry and data processing device to obtain signatures of recipients and scan codes printed on parcel labels, and to respond to tracking inquiries prior to transferring collected information to a different computer.

## SUMMARY OF THE PRESENT INVENTION

According to an aspect of the invention there is provided a method of facilitating data entry into a hand held device from two different people facing each other, said device comprising on its upper case (31) a keyboard (33) having a preferred keyboard reading orientation, a touchscreen (34) located above the keyboard (33) and capable of receiving and displaying a signature input using a stylus, and a signature key (110), said method comprising the steps of: A) at activation of the signature key (110) by a first person holding the device, display data oriented in accordance to said preferred keyboard reading orientation; B) at reception of further keyboard input indicative of a positive verification of said displayed data, flip the screen content to display the data re-oriented by 180 degrees and further display a signature box to sign in; C) at further activation of the signature key (110) after reception of a signature in the signature box by the second person, flip the screen content back to display the data and the executed signature re-oriented by 180 degrees in accordance to said preferred keyboard reading orientation. There is also provided a hand held device for facilitating data entry into said device from two different people facing each other, said device comprising: a keyboard (33) having a preferred keyboard reading orientation, a touchscreen (34) located above the keyboard (33) and capable of receiving and displaying a signature input using a stylus, a signature key (110), said device further comprising at least one processor and at least one memory comprising computer software, which when executed by the processor, causes the device to execute the steps of the method of the invention.

There is also provided a computer program product comprising instructions which, when executed on a computer, cause the computer to perform the steps of a method of the invention.

## BRIEF DESCRIPTION OF THE DRAWINGS

Having thus described the invention in general terms, reference will now be made to the accompanying drawings, which are not necessarily drawn to scale, and wherein:

FIG. 1 is a block diagram of a system compatible with the present invention, showing the methods by which a data acquisition device communicates with a mainframe data repository.

FIG. 2 is a block diagram of another system compatible with the present invention, illustrating the download of data from the data acquisition device to a base station.

FIG. 3 shows a perspective view of a data acquisition device of the present invention, according to one embodiment of the present invention.

FIG. 4 shows a top view of a data acquisition device of the present invention, including a cutaway view showing the packet data radio network antenna located at the top of the data acquisition device.

FIG. 5A shows a rear view perspective of the packet data radio antenna of FIG. 4.

FIG. 5B shows a bottom view perspective of the packet data radio antenna of FIG. 4.

FIG. 6 shows a block diagram of the components of the data acquisition device, including a signature flipping element and a signature display element, according to one embodiment of the present invention.

FIG. 7A shows a top view of the data acquisition device, immediately after receipt of a customer signature, according to one embodiment of the present invention.

FIG. 7B shows a top view of the data acquisition device, including an inverted representation of the customer signature shown in FIG. 7A, according to one aspect of the present invention.

FIG. 8 shows a flow chart illustrating the process by which the data acquisition device screen is inverted for viewing by customers.

FIG. 9 shows a flow chart illustrating the process by which signatures are represented on a display of the data acquisition device.

DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

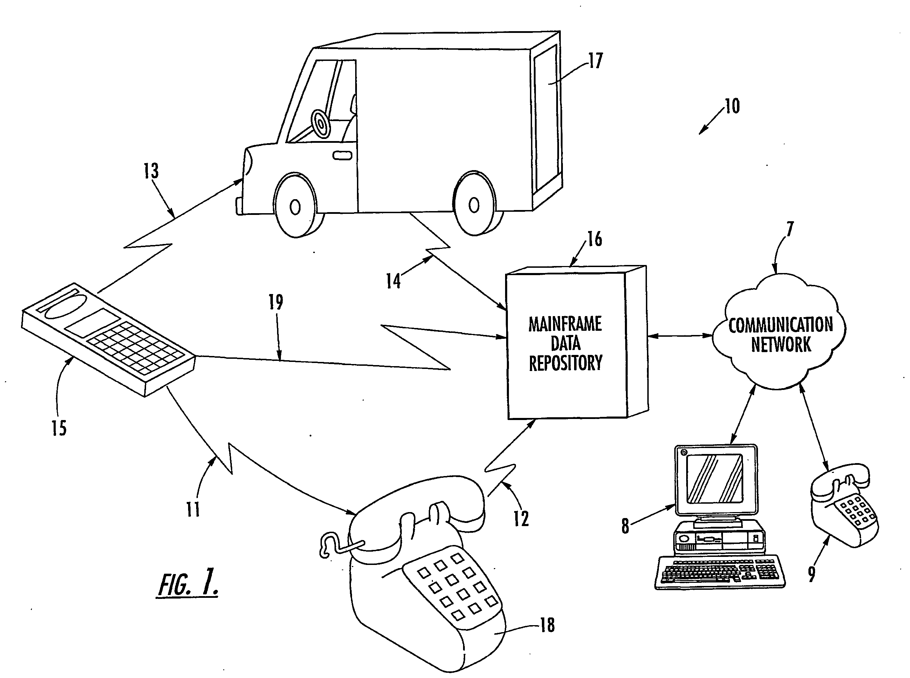

FIG. 1 shows a package tracking system 10. The package tracking system 10 preferably includes a portable data acquisition device 15, a mainframe data repository 16, a delivery vehicle 17, a telephone 18, a communication network 7, and a computer 8 and/or telephone 9. As will be explained in greater detail below, the data acquisition device 15 collects package tracking data, typically at the package delivery location, stores the package tracking data, and forwards the package tracking data to the mainframe data repository 16 via one of three communication methods. The package tracking data is received and stored at the mainframe data repository 16 in a package tracking database (not illustrated), which may be accessed by customers and/or customer service representatives via one or more computers 8 and telephones 9 communicating with the mainframe data repository 16 over a communication network 7. Preferably the communication network 7 is the Internet, and customers (e.g., shippers or recipients) and/or customer service representatives utilize one or more graphical user interfaces, such as web pages, to locate and view the delivery status of packages in transit. Alternatively, it should be appreciated by those of skill in the art that the communication network 7 may also represent one or more PSTNs, wide area networks (WANs), local area networks (LANs), cellular networks, or the like, through which computers, wireless devices, and/or telephones can access data residing at the mainframe data repository 16. Additionally, customer service representatives and/or customers having authorization may also access package tracking data directly from the mainframe data repository 16. Using the system 10, package deliveries can be monitored in real time as packages are delivered by delivery personnel.

As illustrated in FIG. 1, the data acquisition device 15 of the present invention may be in communication with the mainframe data repository 16 through three different methods. Because three different methods of communication are available, package tracking is ensured in every environment. First, the data acquisition device 15 of the present invention can communicate with the mainframe data repository 16 via the delivery truck 17. In this scenario, the data acquisition device 15 transmits collected and stored package tracking directly to a docking device or delivery vehicle adapter (DVA) (not illustrated) located within the delivery vehicle 17 via communication link 13. According to one example, the data acquisition device 15 is physically inserted into the DVA, which is configured to receive the data acquisition device 15. The communication link 13 between the data acquisition device 15 and DVA may be through infrared communication and an infrared communication port located in the data acquisition device 15, or via a direct communication link established when the data acquisition device 15 is inserted into the DVA, as is well known to those of skill in the art. After the package tracking data is communicated to the DVA, the DVA transmits the data to the mainframe data repository 16 via wireless communications link 14. According to one example, the wireless communications link 14 is a cellular communications network. However, it should be appreciated that the communications link 14 may also utilize a public switch telephone network (PSTN), or the like, to communicate with the mainframe data repository 16. Additionally, although not illustrated, if for some reason the mainframe data repository 16 is unavailable or offline, the cellular network and/or PSTN may reroute the package tracking data to another entity functioning as a data repository.

A second method by which the data acquisition device 15 communicates package tracking data to the mainframe data repository is via a conventional telephone 18. In this embodiment the data acquisition device 15 preferably contains an internal acoustic coupler for communicating over an ordinary telephone line. Therefore, communications link 11 is representative of the acoustic communication between the data acquisition device 15 and the telephone 18. In this scenario, package delivery personnel dial a mainframe data repository access number to access the mainframe data repository 16 via a PSTN, illustrated as communications link 12. After dialing the mainframe data repository 16, a speaker located in the data acquisition device 15 may then be held up to the telephone 18 microphone such that package tracking data can be communicated to the mainframe data repository 16 from the data acquisition device 15 via acoustical signals in a manner similar to conventional acoustical modems, as known to those of ordinary skill in the art. Alternatively, although not illustrated, the data acquisition device 15 can also include a modem and telephone jack such that the data acquisition device 15 can hook up to a PSTN directly, and automatically download the package tracking data to the mainframe data repository via a PSTN.

The third, and preferred method of communicating package tracking from the data acquisition device 15 to the mainframe data repository 16 is directly via a packet data radio network 19 using an internal packet data radio located within the data acquisition device 15. The packet data radio network 19 may also utilize one or more PSTNs, LANs, WANs, or the like, for communicating package tracking data to the mainframe data repository 16. According to one exmaple, the internal packet radio located within the data acquisition device 15 is an Ardis® packet data radio, as are well known to those of skill in the art. Like the two communication methods previously discussed, the data acquisition device 15 collects and stores the package tracking data. However, instead of communicating the package tracking data indirectly to the mainframe data repository via a delivery vehicle 17 and DVA, or via an acoustical link with a conventional telephone, the package tracking data is communicated directly to the mainframe data repository 16 immediately after being received and stored in the data acquisition device 15.

The direct communication link via the packet data radio network provides a number of advantages over the two forms of communication previously discussed. First, using the direct link, package tracking data may be communicated immediately after being received in the data acquisition device 15, as opposed to being communicated to the mainframe data repository 16 only after the data acquisition device 15 has been placed in a DVA or the package delivery personnel locates a conventional telephone. Secondly, where package delivery personnel are away from the delivery truck, and DVA, for a period of time (e.g., multiple deliveries are required in one location), the mainframe data repository 16 is continuously updated with real-time package data using the packet data radio, as opposed to requiring the personnel to return to the delivery vehicle or locate a telephone. Third, using the direct communication saves time over the other two methods, as the information is transmitted in real-time while the delivery personnel are 'on-the-go' and performing other tasks. Because of these advantages, it is preferred that package tracking data is communicated to the mainframe data repository 29 via the packet radio, and that the other forms of updating the mainframe data repository 29 are used only when attempts to update the mainframe data repository 16 using the packet data radio are unsuccessful.

The three communication methods discussed above for transmitting package tracking data to the mainframe data repository 16 are exclusive of each other; therefore, although all package tracking data received in the data acquisition device 15 for a given period (e.g., one day, one delivery route, etc.) is stored within the data acquisition device 15, the package tracking data is only communicated to the mainframe data repository 29 once using one of the three communication methods discussed above. To prevent data from being transmitted to the mainframe data repository 16 more than once, which wastes valuable system resources, after each successful transmission of package tracking data the data successfully transmitted is marked in memory of the data acquisition device 15 as having been successfully transmitted so that no addition attempts to transmit the package tracking data are made. The mark may include one data element associated with a specific delivery or pickup record corresponding to one transaction or package.

For instance, when package tracking data is transmitted from the data acquisition device 15 directly to the mainframe data repository 16 using the device's packet data radio, the data is marked after a receipt transmission from the mainframe data repository 16 that the data was accurately received. Thereafter, when the data acquisition device 15 is inserted into the DVA, the package tracking data previously transmitted via the packet data radio is not communicated to the DVA for forwarding via communication link 14 to the mainframe data repository. Likewise, for instance, where package tracking data cannot be transmitted effectively to the mainframe data repository 29 via the packet data radio, the package tracking data stored in the data acquisition device remains unaltered. Thus, when the data acquisition device is inserted into the DVA, the package tracking data is transmitted to the DVA for transmission to the mainframe data repository 16. After acknowledgment from the mainframe data repository 16 that the package tracking data was received, the DVA communicates with the data acquisition device IS to identify that the package tracking data has been effectively transmitted to the mainframe data repository 16. The third method of communicating with the mainframe data repository 16, via the a conventional telephone 18, is typically used only if the direct communication link or indirect communication link via the delivery vehicle 17 and DVA are ineffective. Where the DVA is ineffective at transmitting the package tracking data, one or more messages may be presented to the delivery personnel via an audio, visual, textual, or graphical message on the data acquisition device 15 or DVA that the delivery personnel should locate a telephone and transmit the data to the mainframe data repository via the telephone 18.

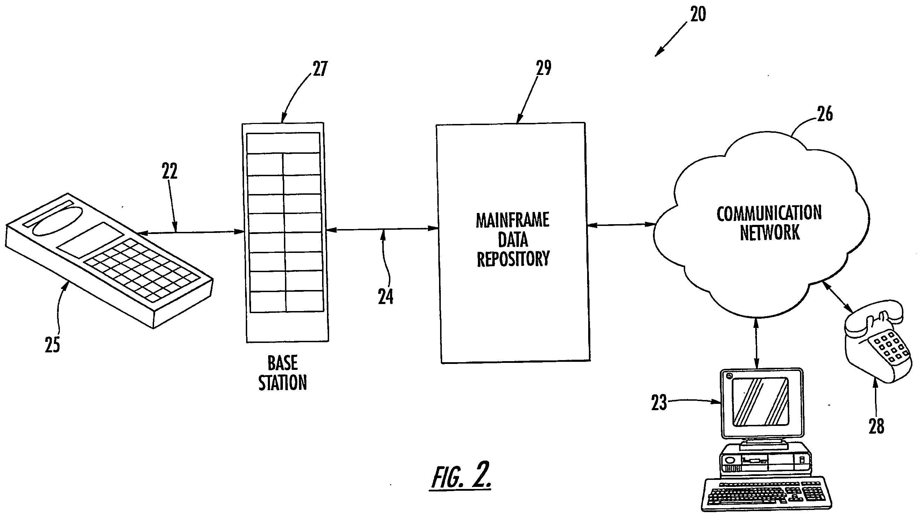

After all package tracking data for one day, or for one delivery period, is communicated via one of the three methods described above, the data acquisition device 15 is returned to a delivery hub location, typically a hub location associated with a delivery vehicle or delivery personnel associated with the data acquisition device. FIG. 2 is a block diagram of a system 20 according to the present invention through which package tracking data is download from a data acquisition device 25 to a base station 27 over a first communication link 22, and further downloaded 24 from the base station 27 to the mainframe data repository 29 over a second communication link 24. The communication links may represent the Internet, a LAN, WAN, or the like, and are preferably high speed connections enabling the download of data from multiple data acquisition devices simultaneously to the mainframe data repository 29. The purpose of the download of package tracking information is to ensure that package tracking data received during the delivery period is accurately represented in the mainframe data repository 29. This data includes package tracking data associated with packages delivered and packages picked up by delivery personnel. According to one example, the download of information replaces all data previously communicated from the data acquisition device to the mainframe data repository, as discussed in detail with reference to FIG. 1, above. Therefore, package tracking data downloaded via the three communication methods of FIG. 1 is used for realtime tracking of packages. On the other hand, any inquiries by customers or customer service personnel subsequent to the docking and download of package tracking data to the base station 27 and mainframe data repository 29 utilizes only the information directly provided by the data acquisition device to the base station. As in FIG. 1, customers or customer service representatives can access the mainframe data repository 29 using one or more computers 23 or telephones in communication with the mainframe data repository 29 via a communications network 26.

According to one exmaple, some package tracking information downloaded to the mainframe data repository 29 via the base station 27 may not have been previously forwarded to the mainframe data repository 29 prior to the data acquisition device's 25 docking with the base station 27. For instance, data requiring substantial bandwidth, but not crucial to the immediate tracking of packages, may not be transmitted via the three methods of communication illustrated in FIG. 1 in an attempt to minimize wireless data transmission time. Minimizing wireless data transmission time eliminates unnecessary wireless transmission costs and reduces wireless transmission errors that could otherwise result where lengthy wireless data transmissions are made. Package tracking data typically communicated via the three modes of communication of FIG. 1. include a package identification or barcode number, the name of the recipient, date, and data indicative of the package's location, such as whether the package has reached its ultimate destination. Additional package tracking data can include, but is not limited to, package weight, the number of packages shipped as part of a complete group of items shipped, the receipt of payment, recipient or shipper signature (as described in detail below), date of pickup or delivery, address of recipient or shipper, and the like, as well as data necessary for the carrier to identify and track the package, as is well known in the art.

Because the download of package tracking data over communications links 22,24 is typically over a high speed connection, and may be used by the system 20 for an accurate and historical package tracking log, all package tracking data stored within the data acquisition device 25 is downloaded to the mainframe data repository 29 via the base station 27. For instance, digital signatures received at a point of delivery and/or pickup maybe included in complete download of package tracking data from the data acquisition device 25 to the base station 27, and from the base station 27 to the mainframe data repository 29, even if such information is not downloaded via the packet data radio, DVA, or telephone and acoustical modem, as in FIG. 1. Because package tracking data maintained in the data acquisition device 25 is held to be more accurate than wireless data transmitted to the mainframe data repository 29 from the data acquisition device 25, the download of data via the base station replaces, or trumps, previously stored data. Although the system 20 may only download new data, or package tracking data from which there is a synchronization error with previously collected package tracking data, such an implementation is less preferable because comparisons would be required and any attempts to determine conflicts may result in less reliable package tracking data records.

According to one example, it should also be appreciated that the base station 27 may also provide one or more functions unrelated to the download of package data, such as recharging data acquisition devices 25 or updating software from the data acquisition device 25. After downloading to the base station 27 is complete, the base station 27 may reset or clear from memory the package tracking data such that new data relating to additional packages to be delivered may be downloaded onto the data acquisition device 25. For example, bar code information for packages to be shipped next time the data acquisition device 25 is in use may be downloaded to the data acquisition device 25 from the base station 27.

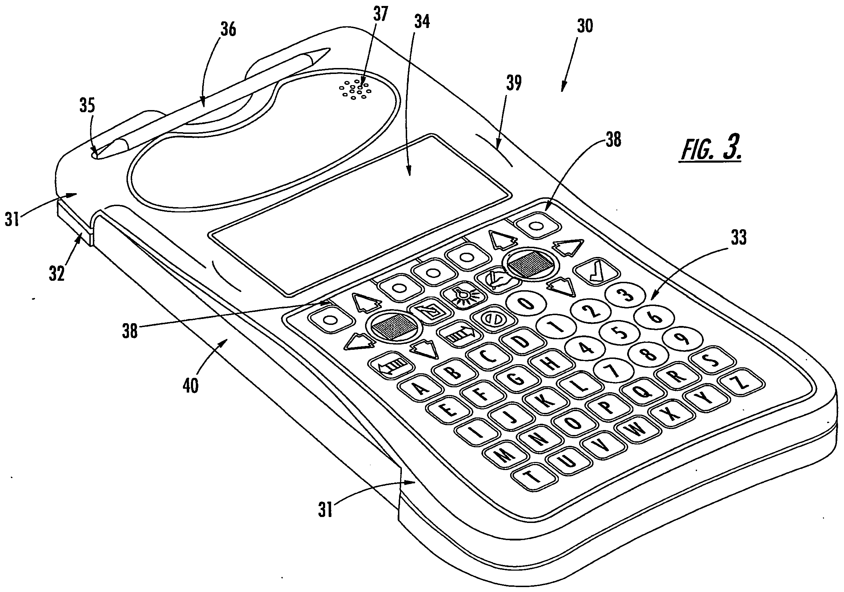

FIG. 3 shows a data acquisition device 30 compatible with the present invention, according to one embodiment of the invention. The structure of the device 30 includes an upper case 31 and a lower case 32, which are preferably constructed of a hard plastic or similar material that provides durability and strength while remaining relatively lightweight. As illustrated in FIG. 3, the upper case 31 of the device 30 includes a keypad 33, screen 34, speaker 37, and stylus holder 35 into which a stylus (or pen) may be removably affixed. Also included in the data acquisition device 30 is a handle 40 and a pair of nubs 39 projecting up on each side of the screen 34 to protect the device from a fall directly on its front surface. Additionally, rubber strips (not illustrated) maybe included which extend along each contoured side of the device 30.

According to one aspect of the invention, the keypad 33, screen 34 and speaker 37 are inset into one or more openings of the upper case 31 such that the keypad 33, screen 34 and speaker 37 may be in contact or communication with one or more elements located within the device. The keypad 33 includes one or more hard keys, such as numbers letters, and symbols (e.g., a bar code or backlight graphic), and soft keys 38, which vary their functions. The keypad enables delivery personnel to input virtually any type of data associated with a package, including a recipient's name and address. The functions associated with each softkey 38 are represented on the screen 34 relative to the softkey's location on the keypad 33. For instance, one or more visible lines 41 extend from the softkeys to locations on the screen 34 at which functions associated with the softkeys 38 are presented.

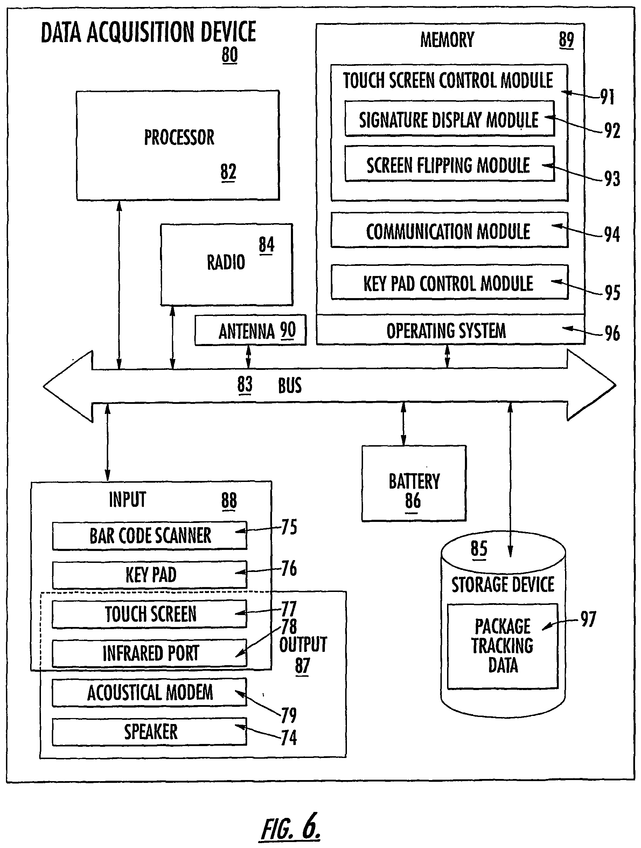

According to one aspect of the present invention, the screen 34 is a multi-layered touch screen incorporating both LCD and signature capture capability so that the touch screen can receive signatures entered using a stylus. Additionally, the screen 34 includes a signature reproducing capability such that a signature is digitally reproduced on the screen under the stylus 36 during execution of the signature using the stylus 36. These functions are discussed in greater detail with respect to FIGs. 6-8, below.

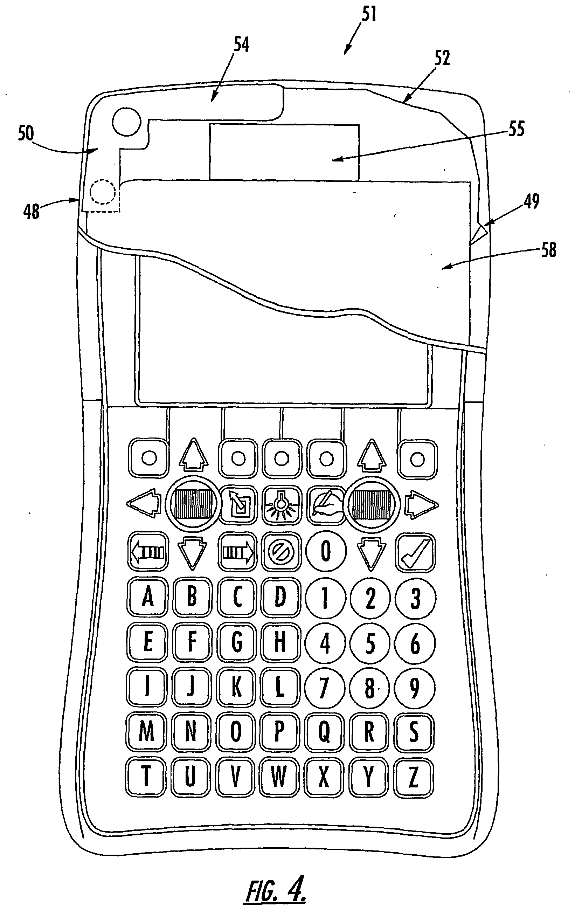

FIG. 4 shows a top view of a data acquisition device 51 of the present invention, including a cutaway view showing a strip line packet data radio network antenna 50 located at the top of the data acquisition device 51. As previously discussed with reference to FIG. 1, the radio network antenna 50 facilitates the communication of the data acquisition device radio with the mainframe data repository 16 such that package tracking data can be wirelessly transmitted to the mainframe data repository 16. The antenna also allows the data acquisition device to receive communications, from the mainframe data repository, or from another location associated with the data acquisition device, such as a hub location where the data acquisition device resides when not in use. Therefore, the packet data radio and antenna 50 enable two-way messaging between the data acquisition device and remote locations associated with the data acquisition device. The two way function allows up-to-the-minute information to pass in both directions, such that the driver can receive real-time delivery instructions (e.g., a rush pickup that is to be picked up) while at the same time transmitting real-time package tracking information to the mainframe data repository.

The antenna 50 is located wholly within the upper and lower case of the. data acquisition device 51, such that no part of the antenna 50 protrudes from the smooth contoured edges formed by the upper and lower cases of the data acquisition device 51. This provides a significant benefit over conventional antennas, as the data acquisition device will likely endure environments in which the device may be dropped or jarred on a daily basis. However, because the antenna is wholly contained within the case, no protruding element is required in the case, which may get cracked or broken if the device were dropped. As illustrated, the antenna 50 is generally located above the bar code scanner 55 and the touch screen components 58. The antenna 50 includes a flat metal strip 52 embedded within a foam member 54. The primary purpose of the foam member 54 is to protect the integrity of the strip line antenna 50 were the data acquisition device 51 to be dropped. As illustrated, the flat metal strip 52 spans the entire width of the data acquisition device 51. Another metal strip 56 is laminated to a surface of the foam member 54 and is connected at a corner 57 to the strip 52 by a conductor (not shown). The strips 52 and 56 and foam member 54 are specially shaped to maximize the omni-directional capability of the antenna 50 and the antenna gain. By providing a lengthy antenna having strips at multiple orientations, sufficient antenna gain maybe produced regardless of the orientation of the data acquisition device 51.

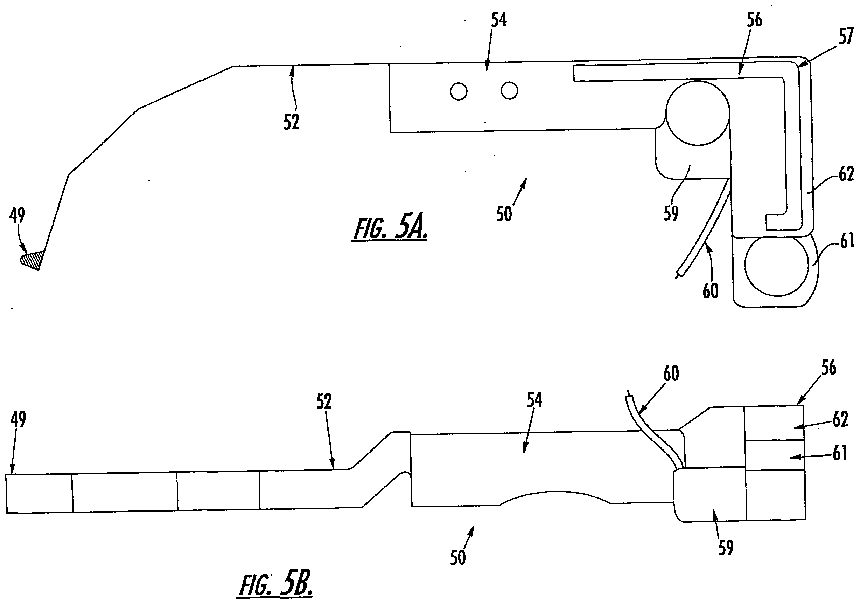

FIG. 5A shows a rear view perspective of the packet data radio antenna 50 of FIG. 4. As shown, the flat metal strip 52 includes a plurality of straight segments, wherein each segment is oriented at an angle with respect to each other segment. Additionally, segments located further from the foam member 54 are at increasing angles with respect to the lengthwise portion of the foam member adjacent the top of the data acquisition device 51. Over the length of the segments, the flat metal strip turns approximately 90 degrees. According to one example, the segments of the flat metal strip 52 include widthwise portions perpendicular to the length of the strip 52 (see FIG. 5B) at least 0.75 centimeters long, and preferably 1 centimeter in length. As is also illustrated in FIGs. 4 and 5A, the flat metal strip 52 includes at least one lengthwise portion oriented at least 90 degrees from at least one other lengthwise portion of the second metal strip. The far end 49 of the antenna 50 may be mounted to touch screen components 58, generally opposite the first end 48 of the antenna 50, which is also preferably affixed to the touch screen components 58. As shown in FIG. 5A, the antenna 50 includes a coaxial line 60 emanating from the foam member 54 on the upper inside corner of the antenna 50. This coaxial line attaches on one end to the flat metal strip 52 at the corner 57 of the antenna 50, and at the other end to the packet data radio (not illustrated).

FIG. 5B shows a bottom view perspective of the packet data radio antenna of FIG. 4. The bottom view perspective illustrates the differing thickness of foam member portions 59, 61, 62. Specifically, the first end 48 of the fiat metal strip extends underneath foam member portion 61, as illustrated in FIG. 5A, such that the metal strip 52 is generally located in the center of the foam member 54. The first end 48 includes a hole identical to the hole in foam member portion 61 such that the foam and first end may be mounted to touch screen components 58. As illustrated in FIG. 5A, the foam member portion 62 is located above foam member portion 61 such that the metal strip 56 laminated to the surface of the foam member 54 is separated from the flat metal strip by the thickness of foam member portions 61 and 62.

The remaining components of the data acquisition device will be described next with reference to FIG. 6, with particular emphasis on the screen of the data acquisition device, and the screen's capabilities to receive, represent, and flip signatures. As will be appreciated by one skilled in the art, the data acquisition device may take the form of an entirely hardware embodiment, although it is preferred that the device will combining software and hardware aspects. Furthermore, the present invention may take the form of a computer program product on a computer-readable storage medium having computer-readable program code means embodied in the storage medium. Any suitable computer-readable storage medium may be utilized including hard disks, removable disks, CD-ROMs, optical storage devices, or magnetic storage devices.

The present invention is described below with reference to block diagrams and flowchart illustrations of methods, apparatuses and computer program products according to an embodiment of the invention. It will be understood that each block of the block diagrams and flowchart illustrations, and combinations of blocks in the block diagrams and flowchart illustrations, respectively, can be implemented by computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

These computer program instructions may also be stored in a computer-readable memory that can direct a computer or other programmable data processing apparatus to function in a particular manner, such that the instructions stored in the computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other-programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

FIG. 6 shows a block diagram of the components of the data acquisition device 80. As illustrated, the data acquisition device 80 generally includes a radio 88, processor 82, storage device 85, memory 89, antenna 90, bus 83, input and output devices 88, 87, and battery 86. The memory 89 includes an operating system 96 and a touch screen control module 91, communication module 94, and key pad control module 95. Furthermore, the touch screen control module includes a signature display module 92 and a screen flipping module 93. It will be appreciated by those of ordinary skill in the art that the modules 91, 92, 93, 94, 95 within the memory 89 may be embodied in computer software residing in the memory 89, which runs with assistance from the operating system 96 and the processor 82. The processor 82 and modules 91, 92, 93, 94, 95 communicate with each other, and with other elements within the data acquisition device 80 via a system interface or bus 83.

The storage device 85 represents at least one storage device, such as a hard disk drive, a floppy disk drive, a CD Rom drive, or optical disk drive, for storing information on various computer-readable media, such as a hard disk, a removable magnetic disk, or a CD-ROM disk. As will be appreciated by one of ordinary skill in the art, the at least one storage device 85 is connected to the system bus 83 by an appropriate interface. The storage device 85 and their associated computer-readable media provide nonvolatile storage for the data acquisition device 80. It is important to note that the computer-readable media could be replaced by any other type of computer-readable media known in the art. Such media may include, for example, magnetic cassettes, flash memory cards, digital video disks, and Bernoulli cartridges. As illustrated, a primary function of the storage device 85 is to store package tracking data 97 received by the data acquisition device 80. The package tracking data is typically received from one or more input devices 88.

The input devices 88 of the data acquisition device 80 include the bar code scanner 75, key pad 76, touch screen 77 and infrared communication element 78. It should be appreciated that at least two of these elements, the touch screen 77 and infrared port 78, also function as output devices 87. Therefore, the output devices 87 include the acoustical modem 79, speaker 74, touch screen 77, and infrared port 78. Additionally, although not included in the input or output devices 88, 89, the radio 84 acts as an input and output device with the aid of the antenna 90, although the items are drawn separately in the block diagram of FIG. 6. Furthermore, one or more additional input/output elements not illustrated may also be included in the data acquisition device, or may be added to the device via a communications port (not illustrated). For instance, a printer, credit card reader, or the like, may be added to the data acquisition device 80 via a communications port in communication with the processor via the bus 83.

Referring again to the memory 89 components, the key pad control module 95 controls the function of the softkeys and the functions that occur when a key is depressed. For example, when a driver pushes a bar code key on the key pad 76, the key pad control module 95 instructs the bar code scanner 75 to scan an item. As another illustrative example, the key pad control module 95 instructs the touch screen 77 to display characters entered via the key pad 76, or instructs the data acquisition device to store package tracking data 97 in the storage device 85 after the delivery personnel has concluded a transaction by pressing one or more keys on the key pad 76. Therefore, the key pad control module controls the user's interaction with the data acquisition device. The communication module 94 facilitates the data acquisition device's communication with other components and communication networks via radio 84 and antenna 90, bar code scanner 75, infrared communication element 78, acoustical modem 79, and touch screen 77. Therefore, the communication module interprets messages received by any input elements 88 and radio 84, and facilitates the communication of the data acquisition device with external components using one or more output devices. For instance, after receipt of acknowledgement that data has been successfully transmitted to the mainframe data repository, the communication module 94, with the aid of the processor, will instruct the storage device 85 to mark the successfully transmitted package tracking data 97 as having been sent and received by the data acquisition device 80 so that the device does not attempt to retransmit the package tracking data.

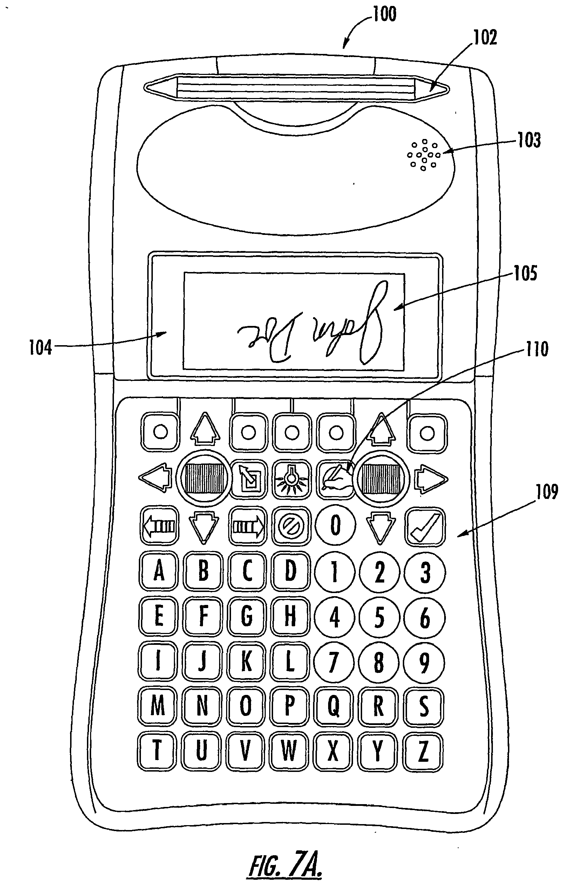

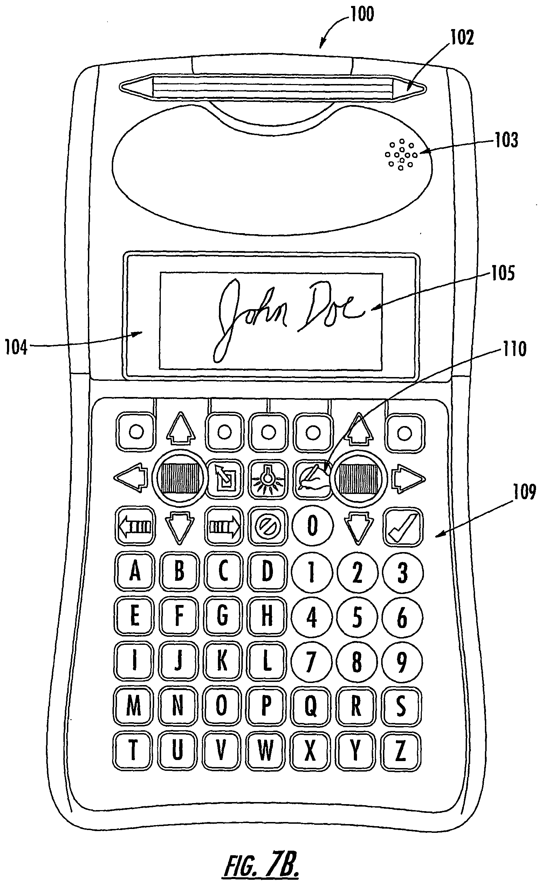

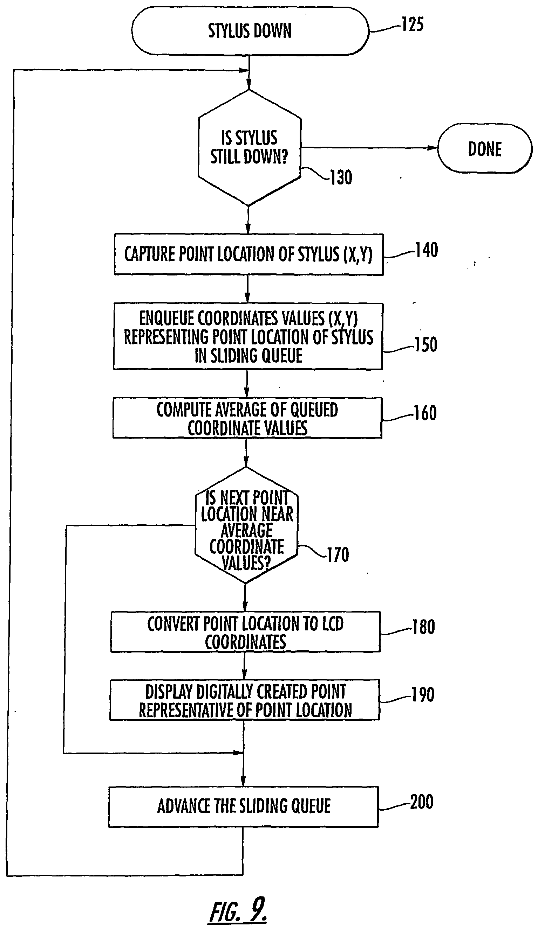

The touch screen control module 91 controls the receipt and display of data input using the touch screen 77. The touch screen control module includes a signature display module, which is a software algorithm which enables the accurate display of a signature while the signature is executed on the touch screen using the stylus. The function of the signature display module 92 are described in detail with reference to the flow chart of FIG. 9, below. The screen flipping module 93 is a software algorithm, in communication with the touch screen 77, which alters the output of the touch screen such that it may be inverted, and thus easily viewed from either end of the data acquisition device. For instance, the screen may be inverted so that data may be viewed by a person standing opposite and facing the package delivery personnel as the delivery personnel holds the data acquisition device. According to another aspect of the invention, the touch screen 77 can receive input, such as a customer signature, in one orientation and slip or reorient the signature 180 degrees for viewing by the package delivery personnel holding the data acquisition device. The function of the screen flipping module is described in detail with reference to FIGs. 7A and 7B.

It will be appreciated by one of ordinary skill in the art that one or more of the memory modules 91, 92, 93, 94, 95 may be combined, and additional components well known to those of skill in the art performing functions described herein may be included in the memory 89. Additionally, one or more functions of the memory modules may be included in one or more other non-memory components of the data acquisition device 80. As an illustrative example, bar code scanner 75 instructions may reside at the bar code scanner 75 instead of at the communication module 94. Therefore, the block diagram of FIG. 6 is intended as only one embodiment of the data acquisition device 80, and is not intended to represent the sole embodiment of the data acquisition device 80.

FIG. 7A shows a top view of the data acquisition device 100, immediately after receipt of a customer signature 105 on the touch screen display 104. As illustrated, the customer signature is received at the touch screen 104 through pressure applied by the stylus on the touch screen 104 as a signature is executed. After receiving the signature 105, the data acquisition may flip or invert the customer signature 106, as illustrated in FIG. 7B. According to one aspect of the invention, inverting a customer signature is part of the overall design concept of the data acquisition device of the present invention. However, it should be appreciated that the data acquisition device 100 may be implemented without a signature flipping capability. More importantly, it should be appreciated that the screen flipping module 93, which performs the flipping of data displayed on the screen 104, may flip any data displayed on the screen 104, or may be implemented independent of the data acquisition device 100. Therefore, the screen flipping module 93 may be incorporated into handheld devices, signature capture devices, and the like, to flip the display of data generated by or input into a device having such functionality.

Referring again to the illustrative embodiment of FIG. 7A, after entering all of the delivery stop/package information, the driver may press a signature key 110 on the keypad 109, which results in the screen displaying the number of packages that have been entered for the stop. After the driver verifies this data is by hitting one or more keys, such as an 'Enter' key, the data acquisition device 100 enters into a Signature Mode. In the Signature Mode the data acquisition device 100 flips the screen 104 so that it can be read from the top end of the data acquisition device (customer orientation) while the driver is holding the data acquisition device 100. A signature box is displayed for the customer to sign in. According to one aspect of the invention, the screen 104 also presents instructions to the customer, such as instructions identifying the location in which the customer should sign. According to another aspect of the invention, the screen 104 may present additional package data which may be verified by the customer, who can read the package data because it is oriented towards the customer such that the customer can easily review the data.

During execution of the signature a customer typically rests their hand on the hand rest 103 incorporated into the data acquisition device 103 directly adjacent to the touch screen 104. The signature appears inverted in FIG. 7A because the package delivery personnel retains the data acquisition device during the execution of the customer signature, and the customer executes their signature as they face the package delivery personnel. In this way, the package delivery personnel does not relinquish control of the data acquisition device 100 to the customer in order to obtain the signature of the customer. Therefore, the driver can face the keypad 109 of the data acquisition device 100 at all times. Once the customer has finished signing, the driver may again press the Signature Key 110 such that the screen including the text and executed signature is flipped back, as shown in FIG. 7B, for the driver to view. The driver may then enter the customer's name in text using the keypad 109. FIG. 7B shows a top view of the data acquisition device 100, from the same perspective as FIG. 7A, including an inverted representation of the customer signature shown in FIG. 7A As previously indicated, the screen flipping module 93 within the data acquisition device 100 performs the vertical flipping of the screen 105 such that the digitally reproduced signature is inverted with respect to the signature digitally reproduced on the screen after execution of the signature.

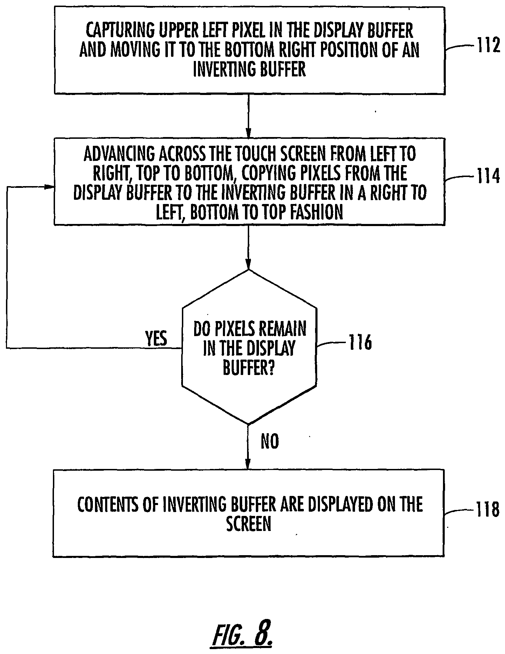

The screen flipping module 93 uses a straightforward graphics flipping algorithm. FIG. 8 shows a flow chart illustrating the process by which the data acquisition device screen is inverted using the graphics flipping algorithm, according to one aspect of the invention. Because the touch screen 104 is a series of pixels, stored within a display buffer associated with the touch screen and located in memory 89, the signature flipping algorithm executes the flip of the screen-presented data by taking the upper left pixel in the display buffer and moving it to the bottom right position of an inverting buffer (block 112). The inverting buffer may also be maintained in the memory 89, and more specifically, within the screen flipping module 93. The purpose of the inverting buffer is to store touch screen pixels that are moved commensurate with the production of a screen oriented at 180 degrees from the screen represented by pixels stored within the display buffer. It should be appreciated that although the inverting buffer is preferably included within the screen flipping module 93, it may alternatively be located at the touch screen 77 or in the storage device 85.

The screen flipping module 93 advances across the touch screen 104 from left to right, top to bottom, copying pixels from the display buffer to the inverting buffer in a right to left, bottom to top orientation (block 113). Therefore, where the screen comprises L*H pixels, where L represents the number of pixels spanning the length of the screen and H represents the number of pixels spanning the height of the screen, a pixel in the display buffer at screen location $L_1$, $H_1$, representing the upper leftmost pixel in the screen, will be placed in the inverting buffer as a pixel at location $L_L,H_H$, the lower rightmost pixel in the screen. For instance, a pixel in the display buffer at screen location $L_5$, $H_8$, will be placed in the inverting buffer as a pixel at screen location $L_{L-5},H_{H-8}$. Therefore, pixels comprising a horizontal line in the center of the screen **104** are remain in the center of the screen, albeit flipped horizontally, and pixels comprising a vertical line in the center of the screen **104** remain in the center of the screen **104,** albeit flipped vertically. After completing the copying of pixels from the display buffer to the inverting buffer in this manner (block 116), the contents of the inverting buffer are displayed (block **118).** It will also be appreciated that the reverse process of that described in FIG. 8 may also be used to invert the screen a second time.

FIG. 9 is a flow diagram illustrating the signature imaging algorithm of the present invention executed by the signature display module 92. The purpose of the signature imaging algorithm is to illustrate a digital representation of a customer's signature on the screen **104** during the execution of the signature. Although the signature imaging algorithm of the present invention as discussed herein refers to illustrating a signature during execution of the signature, it should be appreciated that the algorithm may be used to illustrate any input received from the stylus while the stylus is pressed against the touch screen **104.**

Referring to FIG. 9, when a user begins writing on the screen 14 with the stylus **16,** the "pen down" state is detected at step **120.** While the stylus is still down, as tested at step 130, a conventional digitizer circuit located within the touch screen control module 91 or touch screen 77 captures the (x,y) coordinates of the point of contact at step 140. The point location of the stylus is determined by the application of pressure from the stylus on the LCD touch screen when the stylus is pressed against the LCD touch screen. At step 150, a queue of 10 points is stored in a sliding queue before any display on the LCD screen. Although a queue of 10 points is preferred, it will be appreciated that any number of points may be used as an average threshold value that must be met before a digitally created point is displayed on the LCD touch screen. After 10 points are in the queue, at step 160 the average of the queued coordinates is computed. If the next point captured is within a predetermined tolerance of the average, as tested at step 170, then at step 180 the point is converted from digitizer coordinates to LCD coordinates. The formula for the conversion from digitizer coordinates to LCD coordinates uses a multiplier against the numerator to limit the impact of rounding error.

The formula is as follows:

$$LCD\ POINT = \frac{(100\ X\ digitizer\ point)}{((100\ x\ digitizer\ range)/LCD\ range)}$$

The digitizer and LCD ranges depend on the particular devices, for example 0-1024 for the digitizer range, and 0-330 pixels for the LCD range. This conversion is not required where the digitizer and LCD range are equal, but is otherwise preferred to create a digital image indicative of the movement of the stylus on the touch screen. After this conversion, the point is displayed on the LCD at step 190. The sliding queue is thereafter advanced at step 200 by dropping the first-acquired point in the queue, and the process returns to step 130. If the pen is still down, a new point is captured and added to the queue, and the foregoing steps are repeated.

If, however, at step 170 the point is not close enough to the average, the point is not displayed. The process then continues to step 200 for advancement of the queue and testing of the next point. This process solves the problem of variations in the pressure exerted by the person signing which can create spurious voltages leading to a poor image of the signature or poor accuracy in reproducing the track of the stylus. Therefore, when a person lifts a stylus, the release of pressure will not be misinterpreted as a written line, as occurs in many conventional signature capture devices.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1.  A method of facilitating data entry into a hand held device from two different people facing each other, said device comprising on its upper case (31) a keyboard (33) having a preferred keyboard reading orientation, a touchscreen (34) located above the keyboard (33) and capable of receiving and displaying a signature input using a stylus, and a signature key (110), said method comprising the steps of:

    A) at activation of the signature key (110) by a first person holding the device, display data oriented in accordance to said preferred keyboard reading orientation;
    B) at reception of further keyboard input indicative of a positive verification of said displayed data, flip the screen content to display the data re-oriented by 180 degrees and further display a signature box to sign in;
    C) at further activation of the signature key (110) after reception of a signature in the signature box by the second person, flip the screen content back to display the data and the executed signature re-oriented by 180 degrees in accordance to said preferred keyboard reading orientation.

2.  A hand held device for facilitating data entry into said device from two different people facing each other, said device comprising:

    a keyboard (33) having a preferred keyboard reading orientation, a touchscreen (34) located above the keyboard (33) and capable of receiving and displaying a signature input using a stylus, a signature key (110), said device further comprising at least one processor and at least one memory comprising computer software, which when executed by the processor, causes the device to execute the steps of the method of claim 1.

3.  A computer program product comprising instructions which, when executed on a computer, cause the computer to perform the steps of a method according to claim 1.

**Patentansprüche**

1.  Verfahren zur Vereinfachung der Dateneingabe in ein handgehaltenes Gerät von zwei unterschiedlichen einander zugewandten Personen, wobei das Gerät auf seinem oberseitigen Gehäuse (31) eine Tastatur (33), die eine bevorzugte Tastaturableseorientierung aufweist, einen Touchscreen (34), der oberhalb der Tastatur (33) angeordnet ist und in der Lage ist, eine Unterschrift-Eingabe unter Einsatz eines Eingabestifts anzunehmen und darzustellen, und eine Unterschrift-Taste (110) umfasst, wobei das Verfahren folgende Schritte umfasst:

    A) bei Aktivierung der Unterschrift-Taste (110) durch eine erste Person, die das Gerät hält, werden die Daten entsprechend der bevorzugten Tastaturableseorientierung ausgerichtet dargestellt;
    B) bei Erhalt einer weiteren Tastatureingabe, welche für eine positive Bestätigung der dargestellten Daten bezeichnend ist, wird der Inhalt des Bildschirms gedreht, um die Daten um 180 Grad neu ausgerichtet darzustellen, und zusätzlich wird ein Unterschriftsfeld zum Unterschreiben angezeigt;
    C) bei nochmaliger Aktivierung der Unterschrift-Taste (110) nach Erhalt einer Unterschrift im Unterschriftsfeld durch die zweite Person, wird der Inhalt des Bildschirms zurückgedreht, um die Daten und die geleistete Unterschrift um 180 Grad neu ausgerichtet darzustellen, entsprechend der bevorzugten Tastaturableseorientierung.

2.  Handgehaltenes Gerät zur Vereinfachung der Dateneingabe in dieses Gerät von zwei unterschiedlichen einander zugewandten Personen, umfassend:

    eine Tastatur (33), die eine bevorzugte Tastaturableseorientierung aufweist,
    einen Touchscreen (34), der oberhalb der Tastatur (33) angeordnet ist und in der Lage ist, eine Unterschrift-Eingabe unter Einsatz eines Eingabestifts anzunehmen und darzustellen,

eine Unterschrift-Taste (110), wobei

das Gerät zusätzlich mindestens einen Prozessor und mindestens einen Speicher umfasst, der Computersoftware umfasst, welche, bei Ausführung durch den Prozessor, das Gerät veranlasst, die Schritte des Verfahrens in Anspruch 1 auszuführen.

3. Computerprogrammprodukt umfassend Anweisungen, welche, bei Ausführung auf einem Computer, den Computer veranlassen, die Schritte eines Verfahrens gemäß Anspruch 1 auszuführen.

**Revendications**

1. Procédé pour faciliter l'entrée de données dans un dispositif portable par deux personnes différentes se faisant face, ledit dispositif comprenant sur son boîtier supérieur (31) un clavier (33) ayant une orientation de lecture de clavier préférée, un écran tactile (34) situé au-dessus du clavier (33) et capable de recevoir et d'afficher une entrée de signature à l'aide d'un stylet, et une touche de signature (110), ledit procédé comprenant les étapes consistant à :

A) lors de l'activation de la touche de signature (110) par une première personne tenant le dispositif, afficher des données orientées en fonction de ladite orientation de lecture de clavier préférée ;

B) lors de la réception d'une autre entrée de clavier indicative d'une vérification positive desdites données affichées, retourner le contenu de l'écran pour afficher les données réorientées de 180 degrés et afficher encore une case de signature destinée à recevoir la signature ;

C) lors d'une nouvelle activation de la touche de signature (110) après la réception d'une signature dans la case de signature apposée par la seconde personne, retourner encore une fois le contenu de l'écran pour afficher les données et la signature exécutée réorientées de 180 degrés en fonction de ladite orientation de lecture de clavier préférée.

2. Dispositif portable pour faciliter l'entrée de données dans ledit dispositif par deux personnes différentes se faisant face, ledit dispositif comprenant :

un clavier (33) ayant une orientation de lecture de clavier préférée, un écran tactile (34) situé au-dessus du clavier (33) et capable de recevoir et d'afficher une entrée de signature à l'aide d'un stylet, une touche de signature (110), ledit dispositif comprenant en outre au moins un processeur et au moins une mémoire comprenant un logiciel informatique qui, lorsqu'il est exécuté par le processeur, cause l'exécution par le dispositif des étapes du procédé selon la revendication 1.

3. Produit de programme informatique comprenant des instructions qui, lorsqu'elles sont exécutées sur un ordinateur, causent l'exécution par l'ordinateur des étapes d'un procédé selon la revendication 1.

COMMUNICATION NETWORK

MAINFRAME DATA REPOSITORY

_FIG. 1._

_FIG. 2._

EP 1 615 161 B1

FIG. 3.

_FIG. 4._

FIG. 5A.

FIG. 5B.

17

**FIG. 6.**

FIG. 7A.

FIG. 7B.

CAPTURING UPPER LEFT PIXEL IN THE DISPLAY BUFFER AND MOVING IT TO THE BOTTOM RIGHT POSITION OF AN INVERTING BUFFER —112

ADVANCING ACROSS THE TOUCH SCREEN FROM LEFT TO RIGHT, TOP TO BOTTOM, COPYING PIXELS FROM THE DISPLAY BUFFER TO THE INVERTING BUFFER IN A RIGHT TO LEFT, BOTTOM TO TOP FASHION —114

YES | DO PIXELS REMAIN IN THE DISPLAY BUFFER? —116

NO

CONTENTS OF INVERTING BUFFER ARE DISPLAYED ON THE SCREEN —118

FIG. 8.

FIG. 9.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1001388 A2

- WO 9613015 A2